# EUROPEAN PATENT APPLICATION

(11) **EP 2 129 176 A2**
(43) Date of publication of application: **02.12.2009**
(21) Application number: 09160695.4
(22) Date of filing: 19.05.2009
(51) Int. Cl.: H04W 48/08

(54) **Multiband mobile terminal and cell search method thereof**

(30) Priority: 30.05.2008 KR 20080050792
(71) Applicant: Samsung Electronics Co., Ltd., Suwon-si, Gyeonggi-do (KR)
(72) Inventor: Lee, Shin Duck, Gyeonggi-do (KR)
(74) Representative: Boakes, Jason Carrington

(57) **Abstract**

A multiband mobile terminal and cell search method is provided for reducing the camp-on delay by storing an indicator extracted from system information transmitted by the base station on which the mobile terminal has most recently camped, and scanning the frequency bands indicated by the band indicators first. The multiband mobile terminal supporting at least two frequency bands includes a radio frequency (RF) unit that receives system information ; a storage unit ; and a control unit that controls mobile terminal to scan, when a camp-on event is detected, a frequency band indicated by the band indicator, camp on a base station of a network using the frequency band, and store a band indicator indicating the network. The multiband mobile terminal scans the frequency band of the network in which the mobile terminal locates, resulting in reducing the time required for camping on a cell.

## Description

### TECHNICAL FIELD OF THE INVENTION

The present invention relates to a multiband mobile terminal and, in particularly, to a multiband mobile terminal and cell search method thereof that is capable of reducing the camp-on delay by storing band a indicator extracted from system information transmitted by the base station on which the mobile terminal has most recently camped, and scanning, when a cell search event occurs, the frequency bands indicated by the band indicators first.

### BACKGROUND OF THE INVENTION

Global Systems for Mobile communication (GSM) is a 2nd Generation (2G) mobile communication system dominant in North America and Europe. Typically, a GSM mobile terminal is implemented as a dualband terminal for supporting a pair of frequency bands, e.g., 850MHz and 1900MHz or 900MHz and 1800MHz. Recently, quadband mobile terminals are mainstream devices to cover these 4 GSM frequency bands. Such mobile terminals supporting more than two frequency bands are referred to as multiband mobile terminal.

Meanwhile, when a mobile terminal powers on, it searches for a specific cell to camp on. This is called the cell selection procedure. Here, the cell means a communication service area that the mobile terminal can uniquely identifies.

Due to the multiband nature, however, it takes long time for the multiband mobile terminal to search for an appropriate cell to camp on, resulting in increase of battery power consumption. Accordingly, there has been a need to develop an efficient cell searching method for multiband mobile terminal.

### SUMMARY OF THE INVENTION

To address the above-discussed deficiencies of the prior art, it is a primary object of the present invention to provide a multiband mobile terminal and cell search method thereof that is capable of reducing cell search delay by storing a broadcast channel allocation list and band indicators extracted from system information message transmitted by cells and scanning, when a cell search even occurs, scanning the frequency bands represented by the band indicators first.

In accordance with an exemplary embodiment of the present invention, a multiband mobile terminal supporting at least two frequency bands includes a radio frequency (RF) unit that receives system information transmitted by a base station; a storage unit that stores a band indicator extracted from the system information; and a control unit that controls mobile terminal to scan, when a camp-on event is detected, a frequency band indicated by the band indicator, camp on a base station of a network using the frequency band, and store a band indicator indicating the network. Preferably, the control unit controls the mobile terminal and stores the band indicator into the storage unit together with a broadcast control channel allocation list. Preferably, the broadcast control channel allocation list includes information corresponding to neighbor cells and the neighbor cell information contains information corresponding to the frequency band of the network in which the mobile terminal locates. In some embodiments, the frequency band is one of a first band and a second band. In some embodiments, the first band includes at least one of a 900MHz band and an 1800MHz band. In some embodiments, the second band includes at least one of an 850MHz band and a 1900MHz band. In some embodiments, the control unit controls the mobile terminal, when the camp-on event is an initial camp-on event, to scan a frequency band preset as a preferred frequency band. In some embodiments, the control unit controls the mobile terminal, when failed camping on a base station, the mobile terminal scan all available frequency bands. In some embodiments, the control unit controls the mobile terminal, when a camp-off event is detected, to update the stored band indicator with the band indicator acquired from the base station on which the mobile terminal has camped on most recently.

In accordance with another exemplary embodiment of the present invention, a cell search method for a multiband mobile terminal supporting at least two frequency bands includes checking, when a camp-on event is detected, a previously stored band indicator; attempting to camp on a base station by scanning a frequency band indicated by the band indicator; and updating, when a camp-off event is detected, the band indicator with a band indicator acquired from a base station on which the mobile terminal has camped most recently. In some embodiments, the band indicator is stored with a broadcast control channel allocation list extracted from system information transmitted by the base station on which the mobile terminal has camped most recently. In some embodiments, the broadcast control channel allocation list includes information corresponding to neighbor cells and the neighbor cell information contains information corresponding to the frequency band of the network in which the mobile terminal locates. In some embodiments, the frequency band is one of a first band and a second band. In some embodiments, the first band includes at least one of a 900MHz band and an 1800MHz band. In some embodiments, the second band includes at least one of an 850MHz band and a 1900MHz band. In some embodiments, a cell search method further includes scanning, when the camp-on event is an initial camp-on event, a frequency band preset as a preferred frequency band. In some embodiments, a cell search method further includes scanning, when failed camping on a base station, all available frequency bands.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 is a schematic diagram illustrating an exemplary situation where a mobile terminal performs a cell search according to an exemplary embodiment of the present invention;

FIGURE 2 is a block diagram illustrating a configuration of a mobile terminal according to an exemplary embodiment of the present invention;

FIGURE 3 is a flowchart illustrating a band indicator acquisition procedure of a cell search method according to an exemplary embodiment of the present invention; and

FIGURE 4 is a flowchart illustrating a cell search procedure of a cell search method according to an exemplary embodiment of the present invention.

### DETAILED DESCRIPTION OF THE INVENTION

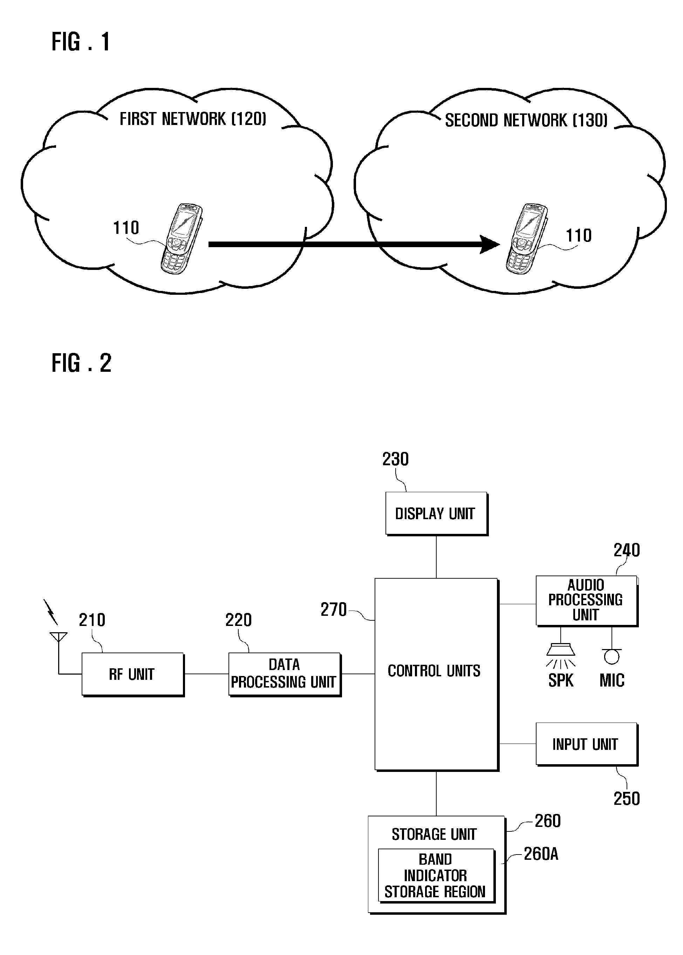

FIGURES 1 through 4, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged multiband mobile terminal.

In the following description, the mobile terminal means a multiband mobile terminal supporting a plurality of frequency bands and represents a Personal Digital Assistant (PDA), a Smartphone, an International Mobile Telecommunication 2000 (IMT-2000) terminal, and their equivalent devices having multiband communication capabilities. The mobile terminal can be implemented with a touch screen display. In some embodiments, the touch screen display is a full-touch screen display.

Exemplary embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention.

In an exemplary embodiment of the present invention, the mobile terminal performs cell search by scanning frequency bands indicated by the band indicators acquired from the system information first. In case of mobile terminal using the Broadcast Control Channel (BCCH) Allocation List, however, it is obvious to those skilled in the art that the band indicators can indicate some or all of the frequency bands of the neighbor base stations listed in the BCCH Allocation List.

FIGURE 1 is a schematic diagram illustrating an exemplary situation where a mobile terminal performs a cell search according to an exemplary embodiment of the present invention.

In FIGURE 1, the mobile terminal 110 having radio interfaces supporting a first and second frequency bands moves from a first network 120 using the first frequency band to a second network 130 using the second frequency band.

In an exemplary embodiment, the mobile terminal 110 can receive and store a BCCH Allocation List containing information corresponding to the neighbor cells transmitted by a base station and scan the frequency bands of the neighbor cells listed in the BCCH Allocation List first for cell search.

In an exemplary embodiment, the mobile terminal 110 can receive and store band indicators containing information corresponding to the frequency bands used by the base stations that are not listed in the BCCH Allocation List and scan the frequency bands indicated by the band indicators first for cell search.

In an exemplary embodiment, the first network 120 can be a network deployed in Europe, and the first band can be 900MHz/1800MHz band; and the second network 130 can be a network deployed in North America including the United States of America and Canada, and the second band can be 850MHz/1900MHz.

In an exemplary embodiment of the present invention, the mobile terminal 110 can be a multiband mobile terminal mainly used in the first network 120 and can be configured to scan the first band of the first network 120. Also, the mobile terminal 110 can be a multiband mobile terminal mainly used by the second network 130 and can be configured to scan the second band used by the second network 130.

The first and second bands can be specified as shown in table 1.

**Table 1**

| Band | UL band | DL band | AFRCN |
|---|---|---|---|
| First band (1800 band) | 1710-1785(MHz) | 1805-1880(MHz) | 512-885 |
| Second band (100 band) | 1850-1910(MHz) | 1930-1990(MHz) | 512-810 |

As shown in table 1, the downlink (DL) band of the first band is overlapped with the uplink (UL) band of the second band. When the mobile terminal 110 that is configured to scan the first band and mainly used in the first network 120 moves into the second network 130, the mobile terminal 110 fails to find a cell in the frequency range of the first band within the second network. Although the first and second bands are overlapped in the range between 1850MHz and 1880MHz, the mobile terminal 110 cannot hear any of channels since the overlapped frequency range is a part of the uplink band of the second network 130. Accordingly, the mobile terminal 110 performs a full scan, after the preferred band scanning failure, so as to scan all available frequency bands and camps on one of the cells using a channel allocated in second band of the second network 130.

In the conventional multiband mobile terminal, the preferred scanning band is fixed such that the mobile terminal moved into a visited network must perform the preset preferred band scan and then the full scan repeatedly, thereby increasing the time for camping on a cell.

In an exemplary embodiment of the present invention, in order to solve this problem, the mobile terminal 110 stores the band indicator acquired from the system information transmitted by the base station on which the mobile terminal 110 has camped most recently. At the next camp-on process, the mobile terminal 110 checks the stored band indicator and performs scanning on the frequency band indicated by the band indicator first.

In this case, the band indicator may include the information regarding the frequency band of the network to which the serving base station belongs. In more detail, the band indicator is set to 0 for indicating the first band and set to 1 for indicating the second band.

In this manner, when cell search is required, the mobile terminal 110 first checks the previously stored band indicator and scans the frequency band indicated by the band indicator for searching a cell to camp on. Accordingly, the mobile terminal 110 can camp on a cell promptly within a network using the frequency band indicated by the band indicator.

However, when the mobile terminal 110 locates in a network of which frequency band differs from that indicated by the band indicator, e.g., the mobile terminal 110 moves from the first network to the second network and vice versa, the mobile terminal 110 fails to find a cell in the preferred band scanning and performs the full scan. In this case, the mobile terminal 110 stores the band indicator acquired during a camp-on process following the full scan and uses the stored band indicator at the next cell search process, resulting in prompt camp on to a cell.

FIGURE 2 is a block diagram illustrating a configuration of a mobile terminal according to an exemplary embodiment of the present invention. As shown in FIGURE 2, the mobile terminal includes a Radio Frequency (RF) unit 210, a data processing unit 220, a display unit 230, an audio processing unit 240, an input unit 250, a storage unit 260, and a control unit 270.

The RF unit 210 includes an RF transmitter for up-converting and amplifying a transmission signal frequency and an RF receiver for low noise amplifying and down-converting a received signal frequency. Particularly in this embodiment, the RF unit 210 can be configured to receive the system information messages that are periodically transmitted by base stations. The system information message contains information corresponding to the cell in which the mobile terminal 110 locates. The RF unit 210 also changes the frequency to be scan and discover the frequency at which the mobile terminal camps on under the control of the control unit 270. For this purpose, the RF unit 210 can be implemented with at least one of mixers and filters.

The data processing unit 220 includes a transmitter for encoding and modulating the transmission signal and a receiver for demodulating and decoding the received signal. For this purpose, the data processing unit 220 can be implemented with at least one of modems and codecs. The codecs include a data codec for processing packet data and an audio codec for processing audio signal including voice.

The display unit 230 can be implemented with a Liquid Crystal Display (LCD) for displaying various visual data and operation status of the mobile terminal. In case of supporting a touch screen function, the display unit 230 can work as a part of the input unit 250.

The audio processing unit 240 plays the audio data output by the data processing unit 220 and delivers the audio signal input through a microphone (MIC). That is, the audio processing unit converts the audio data so as to output in the form of audible voice/sound through a speaker (SPK) and converts the audio signal input through the microphone (MIC) to output in the form of audio data to the data processing unit 220.

The input unit 250 is responsible for receiving user data and control command input. The input unit 250 is provided with a plurality of alphanumeric keys for receiving alphanumeric data and function keys for configuring and executing various functions of the mobile terminal.

The storage unit 260 stores application programs related to the operations of the mobile terminal and application data. The storage unit 260 also stores the BCCH Allocation List extracted from the system information message transmitted by base stations. Particularly in an exemplary embodiment of the present invention, the storage unit 260 is provided with a band indicator storage region 260A for storing the band indicator contained in the system information message.

In an exemplary embodiment of the present invention, the band indicator is separately stored in the band indicator storage region 260A. In an exemplary embodiment of the present invention of the present invention, the band indicator can be stored with the BCCH Allocation List.

The control unit 270 controls general operations of the mobile terminal 110. Particularly in an exemplary embodiment, the control unit 270 controls a series of processes related for the camp-on procedure of the mobile terminal. The control unit 270 controls to extract the band indicator from the system information message transmitted by a base station and store the band indicator within the band indicator storage region 260A of the storage unit 260.

When a camp-on event occurs, the control unit 270 controls such that the mobile terminal scans the frequency band corresponding to the band indicator with reference to the BCCH Allocation List and band indicator.

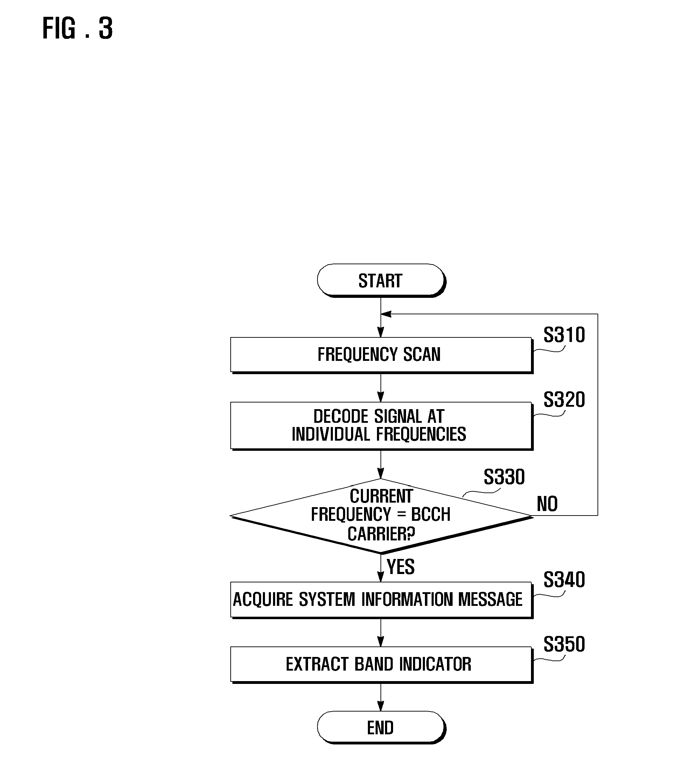

FIGURE 3 is a flowchart illustrating a band indicator acquisition procedure of a cell search method according to an exemplary embodiment of the present invention. Since it is obvious to those skilled in the art, the detailed description on the BCCH Allocation List acquisition process is omitted in this embodiment.

Referring to FIGURE 3, the control unit 270 of the mobile terminal detects a frequency scan event (S310). In an exemplary embodiment, the frequency scan can be performed in a descending order of received frequency level. While scanning the frequencies, the control unit 270 decodes the signal received at individual frequencies (S320). Next, the control unit 270 determines whether the frequency is a BCCH carrier frequency based on the decoded signal (S330). If the frequency is not a BCCH carrier frequency, the process goes to step S310. The steps S310 to S330 are repeated until discovering a BCCH carrier frequency.

If a BCCH carrier frequency is detected at step S330, the control unit 270 acquires the system information at the BCCH carrier frequency (S340). Consequently, the control unit 270 extracts a band indicator from the system information and stores the band indicator into the band indicator storage region 260A of the storage unit 260 (S350). The band indicator can contain information on the frequency band of the network to which the base station transmitted the system information belongs. In an exemplary embodiment, the band indicator is set to 0 for indicating the network using the first band and set to 1 for indicating the network using the second band.

In this case, the control unit 270 checks the stored band indicator and scans the frequencies of the band indicated by the band indicator first, thereby reducing camp-on delay.

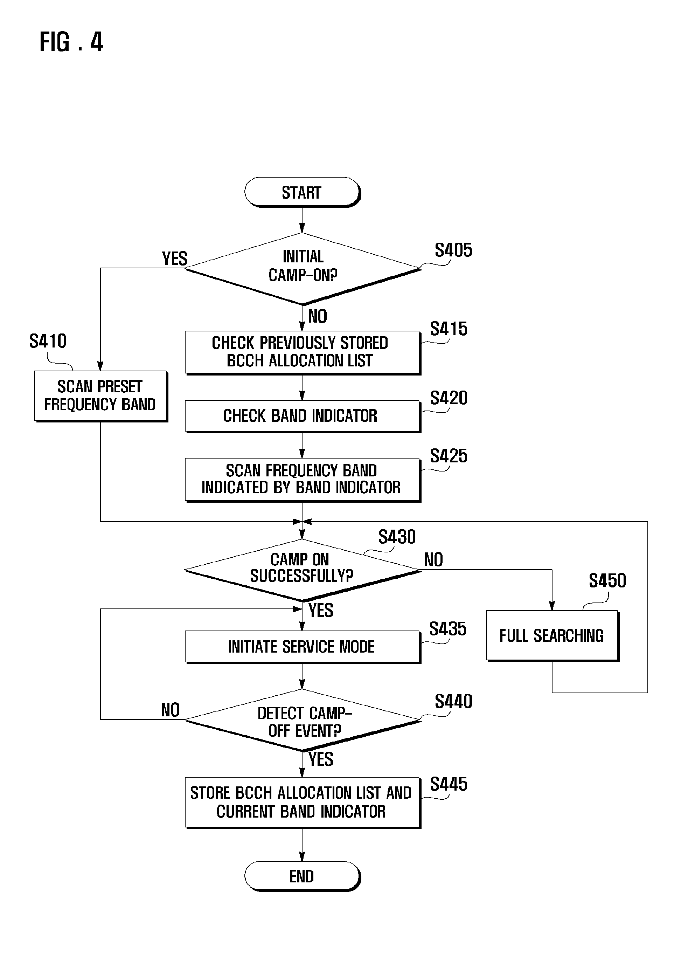

FIGURE 4 is a flowchart illustrating a cell search procedure of a cell search method according to an exemplary embodiment of the present invention.

After acquiring the band indicator in the band indicator acquisition procedure of FIGURE 3, the mobile terminal attempts to camp on the cell.

During the camp-on process, the control unit 270 determines whether the current camp-on attempt is an initial camp-on attempt within the network (S405). If the camp-on attempt is an initial camp-on attempt, the control unit 270 controls such that the mobile terminal scans the frequency band preset with mainly used network (S41 0).

Otherwise, if the current camp-on attempt is not an initial camp-on attempt, the control unit 270 checks the previously stored BCCH Allocation List (S415). The BCCH Allocation List contains information regarding the neighbor cells of the serving cell such that the mobile terminal scans the frequencies of the cells indicated by the BCCH Allocation List first. In an exemplary embodiment, the mobile terminal can be configured to scan the frequencies listed in the BCCH Allocation List first. In another exemplary embodiment, the mobile terminal can be configured to scan the frequencies selected in another way first rather than the frequencies listed in the BCCH Allocation List.

After checking the BCCH Allocation List, the control unit 270 checks the previously stored band indicator (S420). Next, the control unit 270 controls such that the mobile terminal scans the frequencies of the band indicated by the band indicator first (S425). In more detail, the band indicator set to 0 means that the network including the base station uses the first band, and the indicator set to 1 means that the network including the base station uses the second band.

Next, the control unit 270 determines whether the mobile terminal camps on a cell successfully (S430). If the mobile terminal camps on a cell successfully, the control unit 270 controls such that the mobile terminal initiates communication service mode (S435).

Otherwise, if the mobile terminal fails camping on a cell, the control unit 270 controls such that the mobile terminal performs full scan (S450). For example, when the mobile terminal 110 camped on the first network moves to the second network, the mobile terminal performs scanning the frequencies indicated by the BCCH Allocation List and band indicator acquired in the first network first with the camp-on failure and then scanning all the frequencies.

After scanning all the frequencies, i.e., full scan, the control unit 270 determines whether the mobile terminal camps on a cell successfully (S430). If the mobile terminal camps on a cell successfully, the control unit 270 controls such that the mobile terminal initiates communication service mode (S435).

While the mobile terminal operates in the normal communication service mode, the control unit monitors to detect a camp-off event (S440). If a camp-off event is detected, the control unit 270 controls such that the mobile terminal stores the BCCH Allocation List and band indicator acquired from the service base station (S445).

As described above, the multiband mobile terminal and cell search method of the present invention enables the multiband mobile terminal to scan the frequency band of the network in which the mobile terminal locates currently, resulting in reducing the time required for camping on a cell.

Also, the multiband mobile terminal and cell search method of the present invention enables the mobile terminal moved to a visited network using the frequency band different from that of its home network to scan the frequency band of the visited network first using the BCCH Allocation List and band indicator acquired through the initial full scan in the visited network.

Although the present disclosure has been described with an exemplary embodiment, various changes and modifications may be suggested to one skilled in the art. It is intended that the present disclosure encompass such changes and modifications as fall within the scope of the appended claims.

## Claims

1. A multiband mobile terminal supporting at least two frequency bands, comprising:
a radio frequency (RF) unit that receives system information transmitted by a base station;
a storage unit that stores a band indicator extracted from the system information; and
a control unit that controls mobile terminal to scan, when a camp-on event is detected, a frequency band indicated by the band indicator, camp on a base station of a network using the frequency band, and store a band indicator indicating the network.

2. The multiband mobile terminal of claim 1, wherein the control unit controls the mobile terminal stores the band indicator into the storage unit together with a broadcast control channel allocation list.

3. The multiband mobile terminal of claim 2, wherein the broadcast control channel allocation list comprises information corresponding to neighbor cells and the neighbor cell information contains information corresponding to the frequency band of the network in which the mobile terminal locates.

4. The multiband mobile terminal of claim 3, wherein the frequency band is one of a first band and a second band.

5. The multiband mobile terminal of claim 4, wherein the first band comprises at least one of a 900MHz band and an 1800MHz band.

6. The multiband mobile terminal of claim 5, wherein the second band comprises at least one of an 850MHz band and a 1900MHz band.

7. The multiband mobile terminal of claim 6, wherein the control unit controls the mobile terminal, when the camp-on event is an initial camp-on event, to scan a frequency band preset as a preferred frequency band.

8. The multiband mobile terminal of claim 7, wherein the control unit controls the mobile terminal, when failing to camp on a base station, the mobile terminal scans all available frequency bands.

9. The multiband mobile terminal of claim 8, wherein the control unit controls the mobile terminal, when a camp-off event is detected, to update the stored band indicator with the band indicator acquired from the base station on which the mobile terminal has camped on most recently.

10. A cell search method for a multiband mobile terminal supporting at least two frequency bands, comprising:
checking, when a camp-on event is detected, a previously stored band indicator;
attempting to camp on a base station by scanning a frequency band indicated by the band indicator; and
updating, when a camp-off event is detected, the band indicator with a band indicator acquired from a base station on which the mobile terminal has camped most recently.

11. The cell search method of claim 10, wherein the band indicator is stored with a broadcast control channel allocation list extracted from system information transmitted by the base station on which the mobile terminal has camped most recently.

12. The cell search method of claim 11, wherein the broadcast control channel allocation list comprises information corresponding to neighbor cells and the neighbor cell information contains information corresponding to the frequency band of the network in which the mobile terminal locates.

13. The cell search method of claim 12, wherein the frequency band is one of a first band and a second band.

14. The cell search method of claim 13, further comprising scanning, when the camp-on event is an initial camp-on event, a frequency band preset as a preferred frequency band.

15. The cell search method of claim 14, further comprising scanning, when failing to camp on a base station, all available frequency bands.
